# EUROPEAN PATENT APPLICATION

(11) **EP 1 990 970 A1**
(43) Date of publication of application: **12.11.2008**
(21) Application number: 07108050.1
(22) Date of filing: 11.05.2007
(51) Int. Cl.: H04L 29/06

(54) **Method of transmitting an image file**

(71) Applicant: IPEVO Corp., Taipei 106 (TW)
(72) Inventor: Chang, Chao-Han, Taipei 106 (TW)
(74) Representative: Viering, Jentschura & Partner

(57) **Abstract**

A method for transmitting an image file uses an image application program which can cooperate with a web-phone application program. The web-phone application program is responsible for transmitting the image file. After the web-phone application program on a receiver side receives the image file, the image file is displayed on the operating interface of the image application program on the receiver side.

## Description

### BACKGROUND OF THE INVENTION

### 1. Field of the Invention

The present invention relates to a method of transmitting an image file, which permits both users to view the picture sent by one without complicated procedures.

### 2. Description of the Related Art

Some well known web-phone application programs, such as Skype, usually have three communications functions. The first provides audio communications, the second provides for the real time display of images, and the third provides file transmissions.

For Skype, the file transmission is performed by transmitting the file from the sender to the receiver, and the receiver then needs to first download the file onto the hard disk before opening the file.

This procedure, however, is very inconvenient, and it would be more convenient if both users could view the sent image files immediately while discussing the image files.

Therefore, it is desirable to provide a method of transmitting an image file through a simple procedure to mitigate and/or obviate the aforementioned problems.

### SUMMARY OF THE INVENTION

A main objective of the present invention is to provide an image transmission method, which allows both users to view the picture sent by one of them without requiring complicated procedures.

In order to achieve the above-mentioned objective, the proximal image application program of the present invention can be used with a proximal web-phone application program (such as Skype) so a proximal image file can be sent from a proximal computer to a distal computer via a network. Furthermore, the distal computer is installed with a distal web-phone application program, and the distal web-phone application program can communicate with the proximal web-phone application program. The image transmission method of the present invention includes:
obtaining an image file path of the proximal image file;
obtaining a distal web-phone code, wherein the distal web-phone code corresponds to the distal web-phone program;
calling the proximal web-phone code application program; and
sending the image file path and the distal web-phone code to the proximal web-phone code application program;
wherein subsequently, the proximal web-phone code application program communicates with the distal web-phone code application program and sends the proximal image file to the distal computer.

In an embodiment, the proximal computer is connected to a web-camera, and a captured picture from the web-camera is used as the proximal image file. Furthermore, a menu shown by the proximal web-phone application program displays the proximal image file and a dynamic picture obtained by the web-camera.

According to the above-mentioned steps, the users of the proximal and the distal can the user at the proximal end and the user at the distal end can have a conversation via the Skype program and discuss image files that they can send to each other.

Other objects, advantages, and novel features of the invention will become more apparent from the following detailed description when taken in conjunction with the accompanying drawings.

### BRIEF DESCRIPTION OF THE DRAWINGS

FIG. 1 shows an embodiment of the present invention.
FIG. 2 is a flowchart of the present invention.
FIG. 3 illustrates the transmission of a proximal image file according to the present invention.
FIG. 4 shows an embodiment of an operating interface according to the present invention.
FIG. 5 shows an embodiment of an operating interface which displays an image of a distal image file.

### DETAILED DESCRIPTION OF THE PREFERRED EMBODIMENT

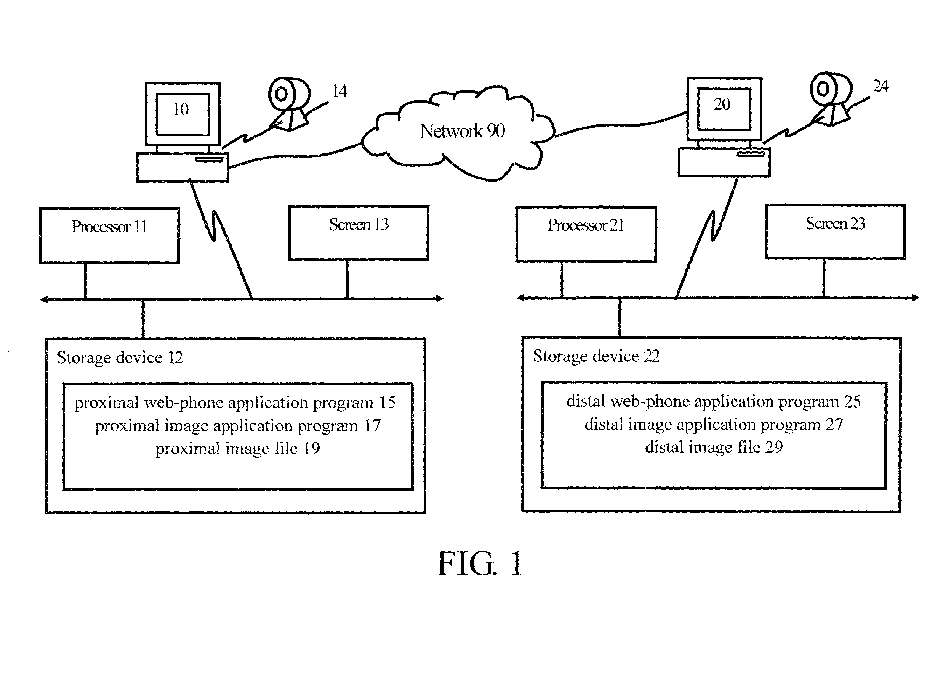

Please refer to FIG. 1 FIG. 1 is a drawing of the present invention. In the present invention, a proximal computer 10 (often be called as a close end or near end computer) can send a proximal image file 19 from a proximal web-phone application program 15 to a distal computer 20 (often be called as a far end or remote computer) via a network 90 (such as the Internet), so the distal computer 20 can display the proximal image file 19.

The proximal computer 10 may be a standard computer (or a PDA, or a palm computer), which comprises a processor 11, a storage device 12 (such as a hard disk or a memory), and a screen 13. In a preferred embodiment, a web-camera 14 (webcam) is connected to the proximal computer 10. Additionally, the storage device 12 may store the proximal web-phone application program 15 (such as Skype or Windows live messenger), a proximal image application program 17 and at least one proximal image file 19.

The distal computer 20 is similar to the proximal computer 10; the distal computer 20 comprises a processor 21, a storage device 22 and a screen 23, and the distal computer 20 is connected to a web-camera 24. The storage device also stores a distal web-phone application program 25 (such as Skype or Windows live messenger), a distal image application program 27 and at least one distal image file 29.

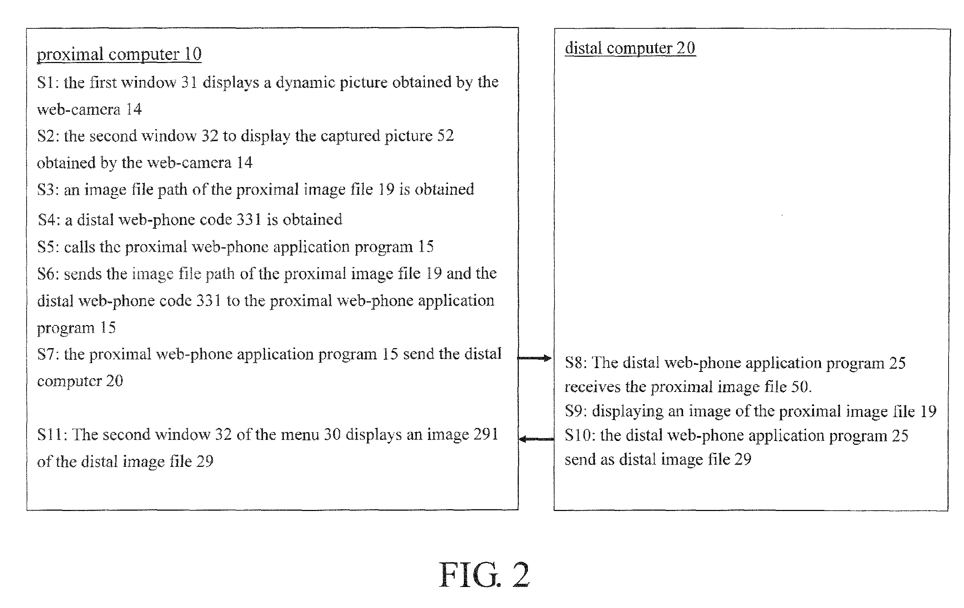

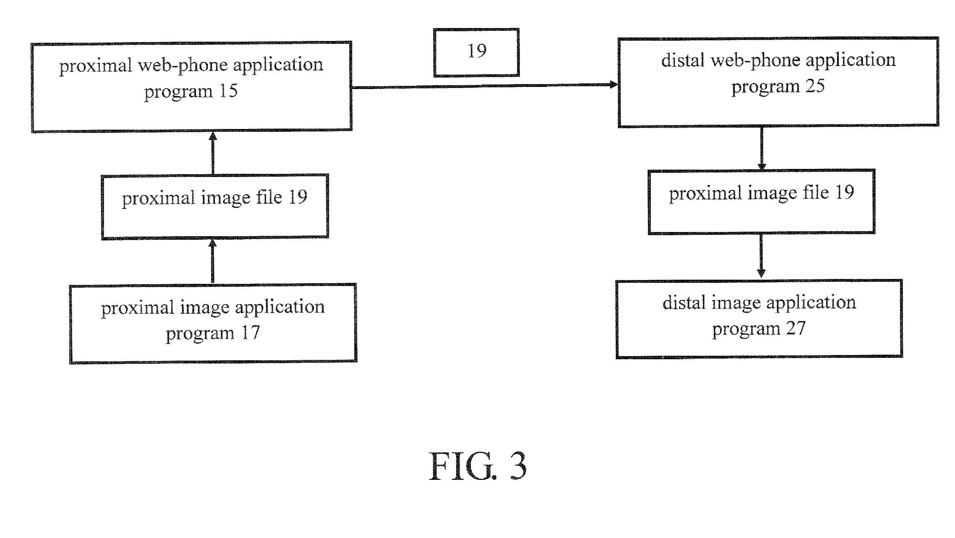

Please refer to FIG. 2 regarding the flowchart of the present invention. Please also refer to FIG. 3 to FIG. 5 in conjunction with FIG. 2.

### Step S1:

A first window 31 displays a dynamic picture obtained by the web-camera 14.

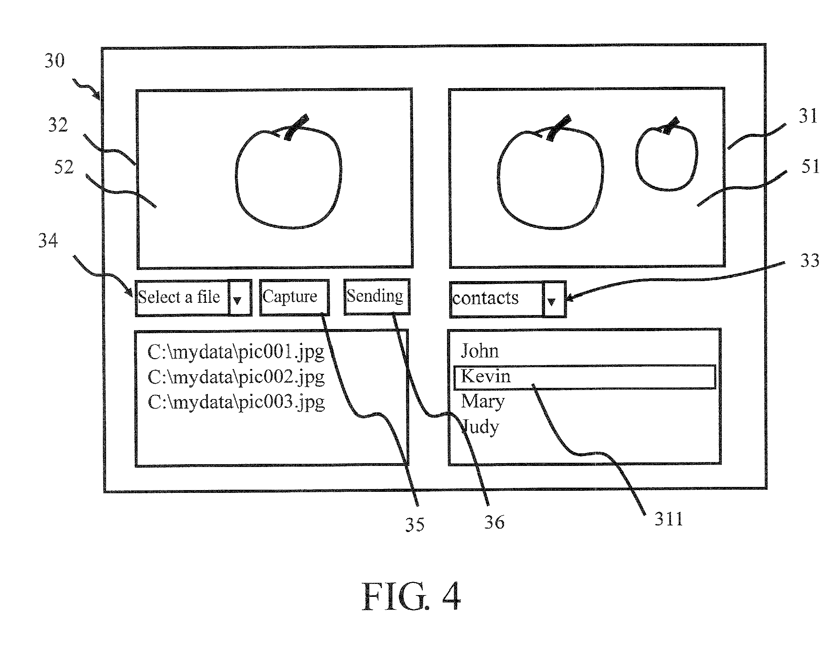

An operating interface 30 of the proximal image application program 17, as shown in FIG. 4, comprises the first window 31 and a second window 32. The first window 31 displays a dynamic picture 51 obtained from the web-camera 14.

### Step S2:

A user of the proximal computer 10 may press a capturing button 35 to capture a picture 52 from the dynamic picture 51 and cause the second window 32 to display the captured picture 52.

Alternatively, the web-camera 14 may have a shutter release (not shown), so that the user may click the shutter release to capture the picture 52.

The second window 32 displays the image that will be sent to or has already been sent to the distal computer 20; the user may not only obtain pictures via the web-camera 14 but may also select an image that is to be sent by way of a proximal image file menu 34.

### Step S3:

An image file path of the proximal image file 19 is obtained. Whether the image to be sent is the captured picture 52 or an image selected by the proximal image file menu 34, the image to be sent is stored in the storage device 12, and may be defined as a proximal image file 19. The storage device 12 may be a hard disk, an optical disk or memory. Either way, the proximal image application program 17 is capable of finding the image file path of the proximal image file 19.

### Step S4:

A distal web-phone code 331 is obtained.

The user selects a receiver for the proximal image file 19 by way of a web-phone code menu 33. The web-phone code menu 33 may list a plurality of distal web-phone codes 331 for various users. For example, when a distal web-phone code 331 "Kevin" is selected, the proximal web-phone application program 15 is able to communicate with the corresponding distal web-phone application program 25 (e.g. Kevin).

The distal web-phone code 331 may be directly obtained from the proximal web-phone application program 15. For example, if the proximal web-phone application program 15 is the Skype application software, the Skype software can store a plurality of contacts selected by the user, and the proximal image application program 17 can copy these plurality of contacts so that the web-phone code menu 33 displays the plurality of distal web-phone code 331 for the user.

### Step S5:

When the proximal image application program 17 obtains the image file path of the proximal image file 19 and the distal web-phone code 331, the proximal image application program 17 calls the proximal web-phone application program 15. Taking Skype as an example, the proximal image application program 17 registers an application object with Skype.

### Step S6:

The proximal image application program 17 sends the image file path of the proximal image file 19 and the distal web-phone code 331 to the proximal web-phone application program 15.

### Step S7:

The proximal image file 19 is sent to the distal computer 20 through the proximal web-phone application program 15. Taking Skype as an example, a channel between the transmitting end and the receiving end is established prior to the transmission so as to send the proximal image file 19 to the distal computer 20.

### Step S8:

The distal web-phone application program 25 receives the proximal image file 19. The proximal web-phone application program 15 and the distal web-phone application program 25 should be able to communicate with each other; for example, the two web-phone application programs may both be the Skype software program.

### Step S9:

The distal image application program 27 displays an image of the proximal image file 19. The distal image application program 27 may also have a menu (not shown) similar to the menu of the proximal image application program 17.

The above-mentioned steps are shown in FIG. 3. The proximal image application program 17 assigns the proximal image file 19 that is to be sent and a receiving end to enable the proximal web-phone application program 15 to cause the proximal web-phone application program 15 and the distal web-phone application program 25 to communicate with each other. Subsequently, the distal web-phone application program 25 receives the proximal image file 19, and the distal web-phone application program 25 calls the distal image application program 27 to cause the distal image application program 27 to display the proximal image file 19.

### Step S10:

By way of example, when the distal computer 20 sends an image to the proximal computer 10: In a similar manner, the distal web-phone application program 25 can send a distal image file 29 to the proximal web-phone application program 15.

### Step S11:

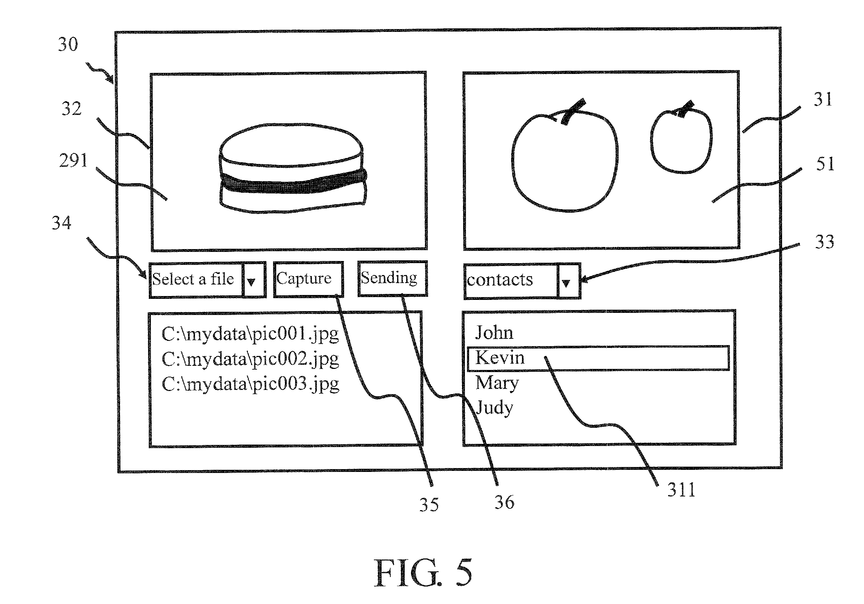

Please refer again to FIG. 5. The second window 32 of the menu 30 displays an image 291 of the distal image file 29.

After the proximal web-phone application program 15 receives the distal image file 29, the proximal web-phone application program 15 calls the proximal image application program 17 to cause the proximal image application program 17 to display the image 291 of the distal image file 29.

According to the above-mentioned steps, the user at the proximal end and the user at the distal end can have a conversation via the Skype program and discuss image files that they can send to each other.

Although the present invention has been explained in relation to its preferred embodiment, it is to be understood that many other possible modifications and variations can be made without departing from the spirit and scope of the invention as hereinafter claimed.

## Claims

1. A method of transmitting an image file, for sending a proximal image from a proximal computer to a distal computer via a network; wherein the proximal computer has installed a proximal web-phone application program and the distal computer has installed a distal web-phone application program; and wherein the distal web-phone application program is capable of communicating with the proximal web-phone application program; the method comprising:
obtaining an image file path of the proximal image file;
obtaining a distal web-phone code, wherein the distal web-phone code corresponds to the distal web-phone program;
calling the proximal web-phone code application program; and
sending the image file path and the distal web-phone code to the proximal web-phone code application program;
whereby the proximal web-phone code application program communicates with the distal web-phone code application program and sends the proximal image file to the distal computer.

2. The method as claimed in claim 1, wherein the proximal computer has a web-camera, and the proximal image file is a captured image from the web-camera.

3. The method as claimed in claim 2 further comprising:
displaying the corresponding captured picture of the proximal image file on the proximal computer.

4. The method as claimed in claim 2 further comprising:
displaying the corresponding captured image of the proximal image file on the distal computer.

5. The method as claimed in claim 3 further comprising:
displaying a dynamic picture obtained from the web-camera on the proximal computer.

6. The method as claimed in claim 1, wherein the distal web-phone code is obtained from the proximal web-phone application program.

7. The method as claimed in claim 6, wherein the proximal computer has a web-camera, and the proximal image file is a captured image from the web-camera.

8. The method as claimed in claim 7, further comprising:
displaying the corresponding captured image of the proximal image file on the proximal computer.

9. The method as claimed in claim 7, further comprising:
displaying the corresponding captured image of the proximal image file on the distal computer.

10. The method as claimed in claim 8, further comprising:
displaying a dynamic image obtained from the web-camera on the proximal computer.

11. A computer readable object for sending a proximal image from a proximal computer to a distal computer via a network; wherein the proximal computer has installed a proximal web-phone application program and the distal computer has installed a distal web-phone application program; and wherein the distal web-phone application program is capable of communicating with the proximal web-phone application program; wherein the object comprises a medium capable of recording program code; the medium comprising:
a first program code for obtaining an image file path of the proximal image file;
a second program code for obtaining a distal web-phone code, wherein the distal web-phone code corresponds to the distal web-phone program;
a third program code for calling the proximal web-phone code application program; and
a fourth program code for sending the image file path and the distal web-phone code to the proximal web-phone code application program;
wherein subsequently the proximal web-phone code application program communicates with the distal web-phone code application program and sends the proximal image file to the distal computer.

12. The computer readable object as claimed in claim 11, wherein the proximal computer comprises a web-camera, and the computer readable object further comprises a fifth program code that is used for providing a first window, the first window displaying a captured dynamic image from the web-camera.

13. The computer readable object as claimed in claim 12 further comprising a sixth program code that is used for providing a second window, the second window displaying a captured image from the web-camera; wherein the proximal image file is the captured image from the web-camera.

14. The computer readable obj ect as claimed in claim 13 further comprising a seventh program code that is used for receiving a distal image file, the distal image file being transmitted from the distal computer to the proximal computer, and the computer readable object further comprises an eighth program code for displaying the corresponding image of the distal image file in the second window.

15. The computer readable object as claimed in claim 14, further comprising a ninth program code that is used for providing a web-phone code menu that displays a plurality of web-phone codes.

16. The computer readable object as claimed in claim 15 further comprising a tenth program code that is used for providing a proximal image file menu from which a user may make a selection.

17. The computer readable object as claimed in claim 16 further comprising an eleventh program code that is used to provide a capturing button for executing a capturing process by the web-camera.

18. The computer readable object as claimed in claim 11 further comprising a sixth program code that is used for providing a second window, the second window displaying a captured image from the web-camera; wherein the proximal image file is the captured image from the web-camera.

19. The computer readable object as claimed in claim 18 further comprising a seventh program code that is used for receiving a distal image file, the distal image file being transmitted from the distal computer to the proximal computer, and the computer readable object further comprises an eighth program code for displaying the corresponding image of the distal image file on the second window.
